# EUROPEAN PATENT SPECIFICATION

(11) **EP 3 741 514 B1**
(45) Date of publication and mention of the grant of the patent: **23.03.2022**
(21) Application number: 20173048.8
(22) Date of filing: 05.05.2020
(51) Int. Cl.: B25J 9/12

(54) **SINGLE AXIS ROBOT**
EINZELACHS-ROBOTER
ROBOT MONO-AXE

(30) Priority: 22.05.2019 JP 2019095917
(43) Date of publication of application: 25.11.2020
(73) Proprietor: Sugino Machine Limited, Uozu city Toyama 937-8511 (JP)
(72) Inventor: ISHITANI, Akihiro, Uozu City, Toyama 9378511 (JP); AOKI, Takuya, Uozu City, Toyama 9378511 (JP)
(74) Representative: Global IP Europe Patentanwaltskanzlei

(56) References cited:
- WO-A1-2014/196397
- CN-A- 107 745 393
- JP-A- 2010 214 501
- JP-B2- 5 569 544
- US-A- 5 107 716

## Description

### BACKGROUND

### 1. Technical Field

The present invention relates to a single axis robot. 2. Description of the Background

A conventional single axis robot includes a box-shaped housing, a pair of linear guides, a slider, a ball screw, a motor, and a cover. The housing has an opening on one side. The pair of linear guides is disposed inside the housing. The slider slides on the pair of linear guides. The ball screw is disposed inside the housing. The motor is connected to the ball screw. The cover covers a space between the opening and the slider. As the conventional single axis robot, for example, THK Corporation, "Precision Stage Series A/AX, CMX, CHX THK Electric Actuator", Page 5, <URL:https://tech.thk.com/upload/product data/upfile/precision stage series.pdf? ga= 2.6214244.1177243993.1557715664-1848377462.1557715664>, hereinafter, "Non-Patent Literature 1" is knowr Documents CN107745393 A and WO2014/196397 A1 disclose other examples of single axis robots.

### BRIEF SUMMARY

When replacing the ball screw or the linear guides of the single axis robot of Non-Patent Literature 1, the cover of the saddle side needs to be removed.

An object of the present invention is to provide a single axis robot in which a ball screw or a linear guide can be easily replaced.

A first aspect of the present invention provides a single axis robot, including:
a housing including, on a first side, a base plate having a first saddle hole;
a support plate arranged in a second side of the housing;
a linear guide arranged inside the housing along the base plate, the linear guide extending along the first saddle hole, wherein the linear guide is disposed on a rear surface of the base plate;
a slider arranged inside the housing on the linear guide, the slider configured to slide along the linear guide;
a saddle arranged on the first side of the slider to protrude to an outside of the housing through the first saddle hole;
a driving device arranged on the second side of the slider to drive the slider; and
a telescopic cover arranged outside the housing between the base plate and the saddle

According to the single axis robot of the present invention, the ball screw or the linear guide is easily replaced.

### BRIEF DESCRIPTION OF DRAWINGS

FIG. 1 is a perspective view of a cleaning apparatus applying a single axis robot according to the embodiment.
FIG. 2 is a perspective view of the single axis robot according to the embodiment.
FIG. 3 is a perspective view of the single axis robot according to the embodiment.
FIG. 4 is a cross-sectional view taken along IV-IV in FIG. 1.
FIG. 5 is a cross-sectional view taken along V-V in FIG. 4.

### DETAILED DESCRIPTION

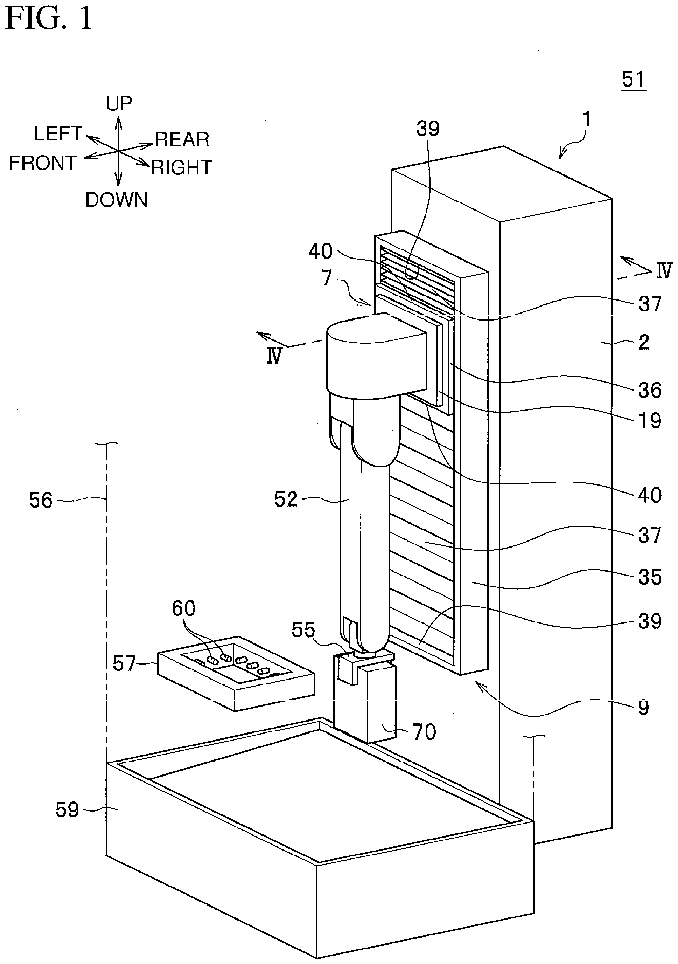

As shown in FIG. 1, a cleaning apparatus 51 includes a cover 56, a table 59, a single axis robot 1, an arm 52, a hand 55, a nozzle 60, and a nozzle block 57. The single axis robot 1 includes a housing 2, and a telescopic cover 9. The housing 2 is disposed upright behind the table 59. The arm 52 is arranged on a saddle 7. The arm 52 is, for example, a five-axis arm. The hand 55 is disposed at the distal end of the arm 52, and grips a workpiece 70. The cover 56 is disposed above the table 59. The cover 56 covers the arm 52, the nozzle 60, and the nozzle block 57. The single axis robot 1 drives the arm 52 in the vertical direction. The arm 52 moves the workpiece 70. The arm 52 moves the workpiece 70 to face the nozzle 60, and cleans the workpiece 70 with the cleaning liquid ejected from the nozzle 60. The cleaning liquid collides with the workpiece 70 and is scattered. The telescopic cover 9 suppresses vapor and cleaning liquid jet filled inside the cover 56 from entering the housing 2.

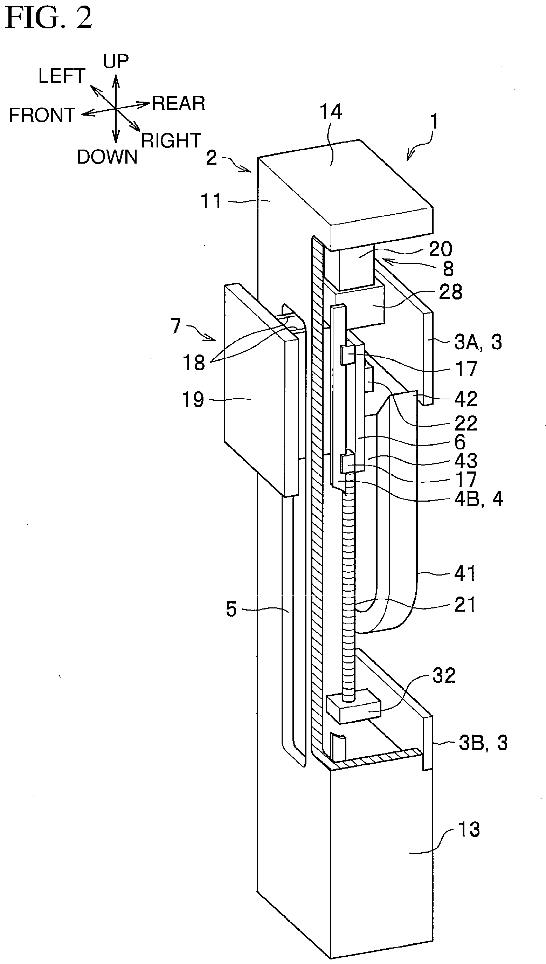

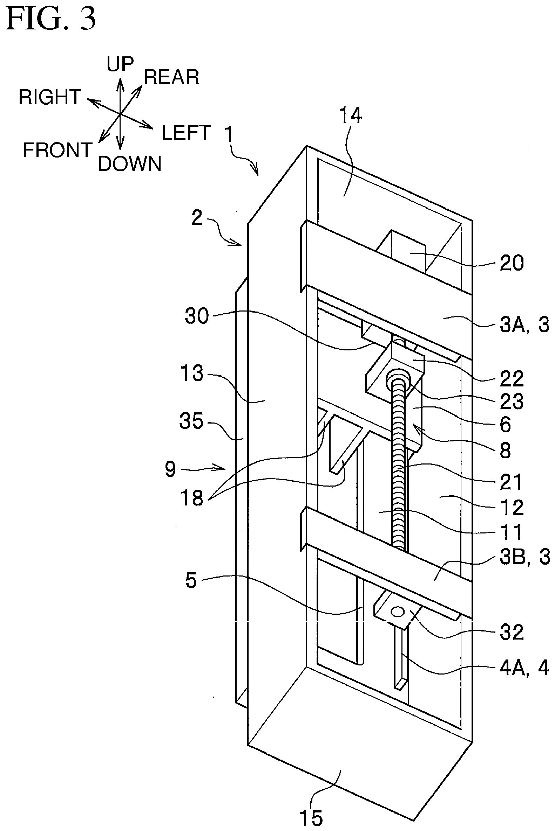

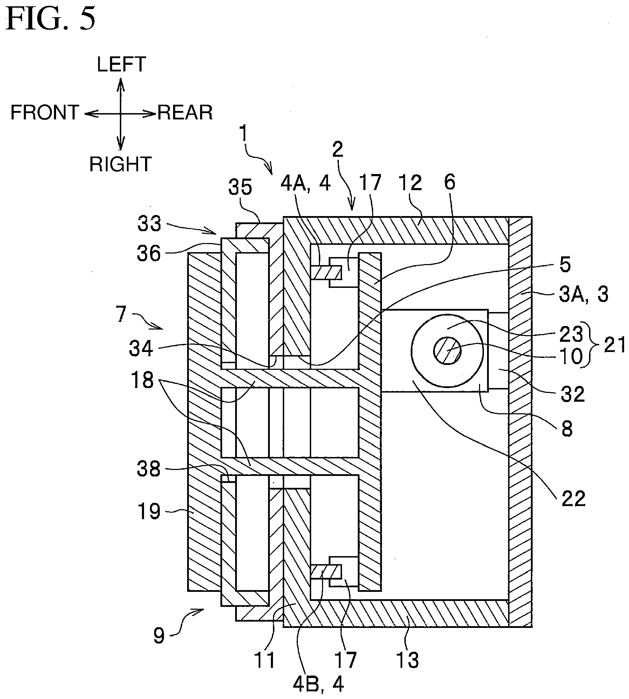

Hereinafter, for convenience of explanation, as shown in FIGs. 2 to 5, the vertical, lateral, and front-rear directions are defined for the single axis robot 1. However, the direction is an example, and the actual installation direction of the single axis robot 1 is not limited.

The single axis robot 1 includes a housing 2, a support plate 3, a linear guide 4, a first saddle hole 5, a slider 6, a saddle 7, and a driving device 8. The single axis robot 1 may include a cable protection tube 41 disposed inside the housing 2.

The housing 2 includes a base plate 11. The base plate 11 is disposed in a front side (first side) of the housing 2. The housing 2 is a box-shaped body, and has an opening, for example, at the rear side (second side). The housing 2 includes, for example, side plates 12, 13 on the left and right sides. The base plate 11 has a first saddle hole 5. The first saddle hole 5 extends vertically at the center of the base plate 11.

The support plate 3 is disposed behind the housing 2. The support plate 3 is disposed apart from the base plate 11. The support plate 3 is disposed across the side plates 12 and 13, for example. The support plate 3 is accurately positioned, for example, by positioning pins. The support plate 3 is detachable from the housing 2. The support plate 3 may include a motor support plate 3A and a shaft end support plate 3B.

The motor support plate 3A is disposed in the upper part of the housing 2. The motor support plate 3A includes a motor bracket 28, a bearing 29 and a bearing holder 30.

The motor bracket 28 is disposed in front of the motor support plate 3A. The bearing holder 30 is disposed in front of the motor support plate 3A. The bearing holder 30 holds the bearing 29. The motor support plate 3A is detachable from the housing 2.

The shaft end support plate 3B is disposed in the lower part of the housing 2. The shaft end support plate 3B includes a bearing 31 and a bearing holder 32. The bearing holder 32 is disposed in a front side (first side) of the shaft end support plate 3B. The bearing holder 32 holds the bearing 31. The shaft end support plate 3B is detachable from the housing 2.

A pair of two linear guides 4 includes guide blocks 17. The linear guide 4 extends vertically, and is disposed on the rear surface of the base plate 11. The linear guide 4 includes a linear guides 4A, 4B. The linear guides 4A, 4B are arranged on the right and left of the first saddle hole 5, respectively. The guide block 17 is disposed on the linear guide 4, and slides on the linear guide 4.

The slider 6 is disposed on the linear guide 4A, 4B via the guide blocks 17. The slider 6 is in a plate having a rectangular shape when viewed in the front-rear direction. The slider 6 includes a nut holder 22. The nut holder 22 is disposed on the rear surface side of the slider 6. The slider 6 is disposed on the rear surface side of the base plate 11.

The saddle 7 includes a pillar 18 and a saddle plate 19. The saddle 7 is formed on the front end (first side) of the slider 6 to protrude to the outside of the housing 2 through the first saddle hole 5. The pillar 18 is fixed to the front surface of the slider 6, and passes through the first saddle hole 5. For example, the pillar 18 is a pair of left and right plate-like members each extending along the front-rear direction. The saddle plate 19 is fixed to the front end of the pillar 18 to be disposed outside the housing 2. The saddle plate 19 has a rectangular shape when viewed in the front-rear direction. The saddle plate 19 is disposed in a vertical plane on the front side of the base plate 11 in parallel with the base plate 11.

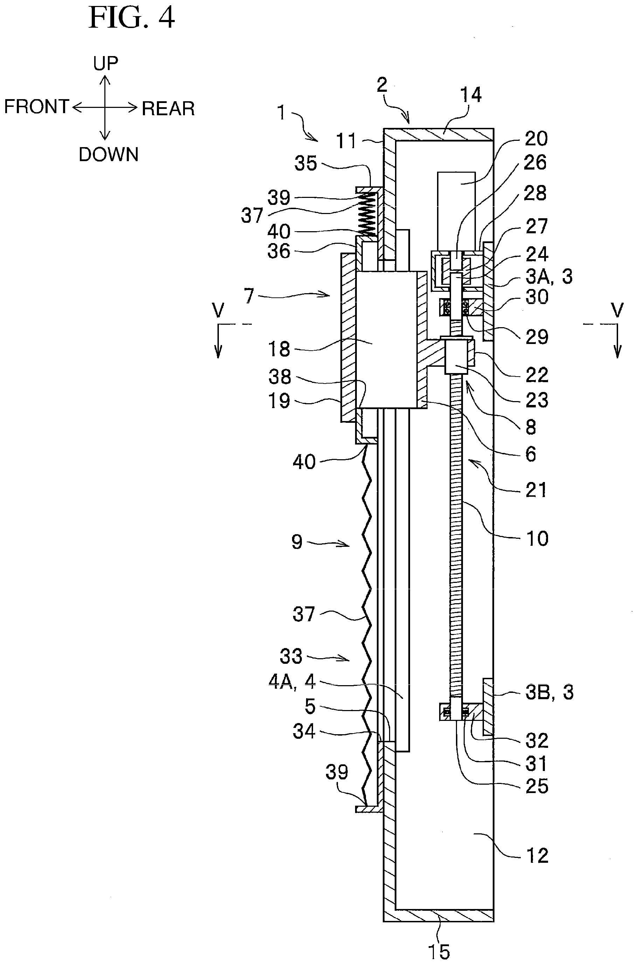

As shown in FIG. 4, the driving device 8 is, for example, a ball screw mechanism. The driving device 8 includes a motor 20, a ball screw 21, and a coupling 27. The driving device 8 extends in the vertical direction. The driving device 8 is disposed on the rear side (second side) of the slider 6. The driving device 8 drives the slider 6.

The ball screw 21 includes a screw shaft 10 and a nut 23. The ball screw 21 includes a motor end 24, and a shaft end 25. The shaft end 25 is supported by the bearing 31. The motor end 24 is supported by the bearing 29. The nut 23 is fixed to the nut holder 22.

The motor 20 is supported by the motor support plate 3A via the motor bracket 28. The motor 20 includes an output shaft 26. The motor 20 is, for example, a servo motor or a stepping motor. The motor 20 is disposed with the output shaft 26 facing downward.

The coupling 27 directly fastens the output shaft 26 and the screw shaft 10.

The telescopic cover 9 is disposed between the base plate 11 and the saddle plate 19. The telescopic cover 9 includes a box 35, a moving box 36, and a bellows 37.

The box 35 has an opening 33 at the front (first side), and has a second saddle hole 34 at the rear (second side). The box 35 has an elongated shape flattened in the front-rear direction, and is attached to the front surface of the base plate 11. The second saddle hole 34 has substantially the same longitudinal shape as the first saddle hole 5, and is disposed so as to overlap with the first saddle hole 5.

The moving box 36 is disposed on the rear surface of the saddle plate 19. The moving box 36 has a box shape flattened in the front-rear direction. The lateral width of the moving box 36 is smaller than the internal lateral width of the box 35. The moving box 36 has a through hole 38. The moving box 36 may be fixed to the saddle plate 19.

The bellows 37 includes a fixed end 39 and a moving end 40. The fixed end 39 is fixed to the box 35. The moving end 40 is fixed to the moving box 36. The bellows 37 are arranged on both sides of the moving box 36 in the moving direction, that is, above and below the moving box 36 in the present embodiment.

The pillar 18 passes through the second saddle hole 34 and the through hole 38. The moving box 36 moves together with the saddles 7 along the linear guides 4A, 4B in the box 35.

As shown in FIG. 2, the cable protection tube 41 includes a fixed end 42, and a moving end 43. The fixed end 42 is fixed to the motor support plate 3A. The moving end 43 is fixed to the rear end of the saddle 7. The cable protection tube 41 is disposed so as to hang down in a U-shape. Inside the cable protection tube 41, for example, a signal cable connected to the arm 52, an air pipe, a power cable or the like is accommodated.

By removing the nut 23 from the nut holder 22, and removing the support plate 3 from the housing 2, the driving device 8 is easily detached from the housing 2. As the telescopic cover 9 is disposed between the base plate 11 and the saddle plate 19, the penetration of the cleaning liquid and foreign matter into the inside of the housing 2 is suppressed.

It should be noted that the present invention is not limited to the embodiments described above, and various modifications can be made without departing from the scope of the appended claims, and all technical matters included in the technical idea described in the claims are the subject matter of the present invention. While the foregoing embodiments illustrate preferred examples, those skilled in the art will appreciate that various alternatives, modifications, variations, or improvements may be made within the scope of the appended claims.

### Reference Signs List

- 1: Single axis robot
- 2: Housing
- 3: Support plate
- 3A: Motor support plate
- 3B: Shaft end support plate
- 4: Linear guide
- 4A, 4B: linear guide
- 5: First saddle hole
- 6: Slider
- 7: Saddle
- 8: Driving device
- 9: Telescopic cover
- 11: Base plate
- 18: Pillar
- 19: Saddle plate
- 20: Motor
- 21: Ball screw
- 23: Nut
- 24: Motor end
- 25: Shaft end
- 33: Opening
- 34: Second saddle hole
- 35: Box
- 36: Moving box
- 37: Bellows
- 39: Fixed end
- 40: Moving end
- 41: Cable protection tube
- 42: Fixed end
- 43: Moving end

## Claims

1. A single axis robot, comprising:
a housing (2) including, on a first side, a base plate (11) having a first saddle hole (5);
a support plate (3) arranged in a second side of the housing (2), wherein the support plate (3) is detachably arranged on the housing (2);
a linear guide (4) arranged inside the housing (2) along the base plate (11), the linear guide (4) extending along the first saddle hole (5), wherein the linear guide (4) is disposed on a rear surface of the base plate (11);
a slider (6) arranged inside the housing (2) on the linear guide (4), the slider (6) configured to slide along the linear guide (4);
a saddle (7) arranged on the first side of the slider (6) to protrude to an outside of the housing (2) through the first saddle hole (5);
a driving device (8) arranged on the second side of the slider (6) to drive the slider (6), wherein the driving device (8) is supported by the support plate (3); and
a telescopic cover (9) arranged outside the housing (2) between the base plate (11) and the saddle (7).

2. The single axis robot according to claim 1, wherein
the driving device (8) includes
a motor (20), and
a ball screw (21) connected to the motor (20), the ball screw (21) including
a motor end (24), and
a shaft end (25) opposite to the motor end (24),
the support plate (3) includes
a motor support plate (3A) supporting the motor (20) and the motor end (24), and
a shaft end support plate (3B) supporting the shaft end (25).

3. The single axis robot according to any one of claims 1 or 2, wherein
the linear guide (4) includes a pair of two linear guides (4) arranged parallel to the base plate (11), and
the first saddle hole (5) is arranged between the two linear guides (4).

4. The single axis robot according to any one of claims 1 to 3, wherein
the saddle (7) includes
a pillar (18) fixed to the slider (6) through the first saddle hole (5), and
a saddle plate (19) fixed to an end of the pillar (18), the saddle plate (19) arranged outside the housing (2).

5. The single axis robot according to any one of claims 1 to 4, wherein
the telescopic cover (9) includes
a box (35) arranged on the base plate (11), the box (35) having an opening on the first side, and a second saddle hole (34) on the second side,
a moving box (36) configured to move together with the saddle (7) inside the box (35) along the linear guide (4) with the saddle (7) passing through an inside of the box (35), and
a bellows (37) including a fixed end (39) fixed to the box (35) and a moving end (40) fixed to the moving box (36), the bellows (37) arranged on both sides of the moving box (36) in a moving direction.

6. The single axis robot according to claim 2, further comprising:
a cable protection tube (41) arranged in the housing (2), the cable protection tube (41) including
a fixed end (42) fixed to the motor support plate (3A), and
a moving end (43) fixed to the second side of the saddle (7).

## Patentansprüche

1. Einachsiger Roboter, der aufweist:
ein Gehäuse (2), das auf einer ersten Seite eine Grundplatte (11) mit einem ersten Sattelloch (5) aufweist;
eine Halteplatte (3), die auf einer zweiten Seite des Gehäuses (2) angeordnet ist, wobei die Halteplatte (3) lösbar am Gehäuse (2) angeordnet ist;
eine lineare Führung (4), die innerhalb des Gehäuses (2) entlang der Grundplatte (11) angeordnet ist, wobei sich die lineare Führung (4) entlang des ersten Sattellochs (5) erstreckt, wobei die lineare Führung (4) auf einer Rückseite der Grundplatte (11) angeordnet ist;
ein Gleitstück (6), das innerhalb des Gehäuses (2) an der linearen Führung (4) angeordnet ist, wobei das Gleitstück (6) konfiguriert ist, entlang der linearen Führung (4) zu gleiten;
einen Sattel (7), der auf der ersten Seite des Gleitstücks (6) so angeordnet ist, dass er durch das erste Sattelloch (5) zur Außenseite des Gehäuses (2) vorsteht;
eine Antriebsvorrichtung (8), die auf der zweiten Seite des Gleitstücks (6) angeordnet ist, um das Gleitstück (6) anzutreiben, wobei die Antriebsvorrichtung (8) durch die Halteplatte (3) gehalten wird; und
eine ausziehbare Abdeckung (9), die außerhalb des Gehäuses (2) zwischen der Grundplatte (11) und dem Sattel (7) angeordnet ist.

2. Einachsiger Roboter nach Anspruch 1, wobei
die Antriebsvorrichtung (8) aufweist:
einen Motor (20), und
eine Kugelumlaufspindel (21), die mit dem Motor (20) verbunden ist, wobei die Kugelumlaufspindel (21) aufweist:
ein Motorende (24), und
ein Wellenende (25) gegenüber dem Motorende (24),
die Halteplatte (3) aufweist:
eine Motorhalteplatte (3A), die den Motor (20) und das Motorende (24) hält, und
eine Wellenende-Halteplatte (3B), die das Wellenende (25) hält.

3. Einachsiger Roboter nach einem der Ansprüche 1 oder 2, wobei
die lineare Führung (4) ein Paar von zwei linearen Führungen (4) aufweist, die parallel zur Grundplatte (11) angeordnet sind, und
das erste Sattelloch (5) zwischen den beiden linearen Führungen (4) angeordnet ist.

4. Einachsiger Roboter nach einem der Ansprüche 1 bis 3, wobei der Sattel (7) aufweist
eine am Gleitstück (6) befestigte Säule (18) durch das erste Sattelloch (5), und
eine an einem Ende der Säule (18) befestigte Sattelplatte (19), wobei die Sattelplatte (19) außerhalb des Gehäuses (2) angeordnet ist.

5. Einachsiger Roboter nach einem der Ansprüche 1 bis 4, wobei die ausziehbare Abdeckung (9) aufweist:
einen Kasten (35), der an der Grundplatte (11) angeordnet ist, wobei der Kasten (35) auf der ersten Seite eine Öffnung und auf der zweiten Seite ein zweites Sattelloch (34) aufweist,
einen beweglichen Kasten (36), der konfiguriert ist, sich zusammen mit dem Sattel (7) innerhalb des Kastens (35) entlang der linearen Führung (4) zu bewegen, wobei sich der Sattel (7) durch das Innere des Kastens (35) bewegt, und
einen Faltenbalg (37), der ein festes Ende (39), das am Kasten (35) befestigt ist, und ein bewegliches Ende (40) aufweist, das am beweglichen Kasten (36) befestigt ist, wobei der Faltenbalg (37) auf beiden Seiten des beweglichen Kastens (36) in einer Bewegungsrichtung angeordnet ist.

6. Einachsiger Roboter nach Anspruch 2, der ferner aufweist:
ein Kabelschutzrohr (41), das im Gehäuse (2) angeordnet ist, wobei das Kabelschutzrohr (41) aufweist:
ein festes Ende (42), das an der Motorhalteplatte (3A) befestigt ist, und
ein bewegliches Ende (43), das an der zweiten Seite des Sattels (7) befestigt ist.

## Revendications

1. Robot à axe unique, comprenant :
un boîtier (2) présentant, sur un premier côté, une plaque de base (11) ayant un premier trou (5) pour selle ;
une plaque de support (3) disposée sur un deuxième côté du boîtier (2), ladite plaque de support (3) étant disposée de manière amovible sur le boîtier (2) ;
un guidage linéaire (4) disposé à l'intérieur du boîtier (2) le long de la plaque de base (11), ledit guidage linéaire (4) s'étendant le long du premier trou (5) pour selle, ledit guidage linéaire (4) étant disposé sur une surface arrière de la plaque de base (11) ;
un coulisseau (6) disposé à l'intérieur du boîtier (2) sur le guidage linéaire (4), ledit coulisseau (6) étant prévu pour glisser le long du guidage linéaire (4) ;
une selle (7) disposée sur le premier côté du coulisseau (6) de manière à faire saillie vers l'extérieur du boîtier (2) par le premier trou (5) pour selle ;
un dispositif d'entraînement (8) disposé sur le deuxième côté du coulisseau (6) pour entraîner le coulisseau (6),
ledit dispositif d'entraînement (8) étant supporté par la plaque de support (3) ; et
un couvercle télescopique (9) disposé à l'extérieur du boîtier (2) entre la plaque de base (11) et la selle (7).

2. Robot à axe unique selon la revendication 1, où
le dispositif d'entraînement (8) comprend
un moteur (20), et
une vis à bille (21) raccordée au moteur (20), ladite vis à bille (21) comprenant
une extrémité de moteur (24), et
une extrémité d'arbre (25) opposée à l'extrémité de moteur (24),
la plaque de support (3) comprend
une plaque de support (3A) de moteur supportant le moteur (20) et l'extrémité de moteur (24), et
une plaque de support (3B) d'extrémité d'arbre supportant l'extrémité d'arbre (25).

3. Robot à axe unique selon la revendication 1 ou la revendication 2, où
le guidage linéaire (4) comprend une paire de guidages linéaires (4) disposés parallèlement à la plaque de base (11), et
le premier trou (5) pour selle est présenté entre les deux guidages linéaires (4).

4. Robot à axe unique selon l'une des revendications 1 à 3, où la selle (7) comprend
un montant (18) fixé au coulisseau (6) au travers du premier trou (5) pour selle, et
une plaque (19) de selle fixée à une extrémité du montant (18), ladite plaque (19) de selle étant présentée à l'extérieur du boîtier (2).

5. Robot à axe unique selon l'une des revendications 1 à 4, où le couvercle télescopique (9) comprend
une boîte (35) disposée sur la plaque de base (11), ladite boîte (35) ayant une ouverture sur le premier côté, et un deuxième trou (34) pour selle sur le deuxième côté,
une boîte mobile (36) prévue pour se déplacer avec la selle (7) à l'intérieur de la boîte (35) le long du guidage linéaire (4), la selle (7) passant par l'intérieur la boîte (35), et
un soufflet (37) présentant une extrémité fixe (39) fixée à la boîte (35) et une extrémité mobile (40) fixée à la boîte mobile (36), ledit soufflet (37) étant présenté de part et d'autre de la boîte mobile (36) dans la direction de déplacement.

6. Robot à axe unique selon la revendication 2, comprenant en outre :
un tube de protection de câble (41) disposé dans le boîtier (2), ledit tube de protection de câble (41) présentant
une extrémité fixe (42) fixée à la plaque de support de moteur (3 A), et
une extrémité mobile (43) fixée sur le deuxième côté de la selle (7).
